# EUROPEAN PATENT APPLICATION

(11) **EP 1 006 093 A1**
(43) Date of publication of application: **07.06.2000**
(21) Application number: 99309791.4
(22) Date of filing: 06.12.1999
(51) Int. Cl.: C04B 35/5831, C04B 35/628, C04B 35/63

(54) **High hardness and strength sintered body**

(30) Priority: 04.12.1998 JP 34620898
(71) Applicant: SUMITOMO ELECTRIC INDUSTRIES, LTD., Osaka-shi, Osaka 541 (JP)
(72) Inventor: Kukino, Satoru, 1-1. Koyakita 1-chome, Itami-shi, Hyogo (JP); Fukaya, Tomohiro, 1-1. Koyakita 1-chome, Itami-shi, Hyogo (JP); Shiraishi, Junichi, 1-1. Koyakita 1-chome, Itami-shi, Hyogo (JP); Nakai, Tetsuo, 1-1. Koyakita 1-chome, Itami-shi, Hyogo (JP)
(74) Representative: Cross, Rupert Edward Blount

(57) **Abstract**

A sintered body contains hard particles having high pressure type boron nitride particles covered by a coating layer and a binding material for integrating these hard particles. The coating layer contains as a starting material at least one of nitride and boride of Ti, Zr and Hf and solid-solution thereof and has an average thickness of 0.09 µm to 2 µm. The binding material contains as starting material 0.5% to 40% by weight of one or more of Al, elements belonging to iron group and nitride and boride thereof, less than 5% by weight of oxide of these elements, and the balance of one or more of nitride and boride of Ti, Zr, Hf and Ta and inevitable impurities. The proportion of the hard particles in the total weight of unsintered starting materials is from 10% to 99% by weight.

## Description

The present invention relates to a high pressure form boron nitride-based sintered body. More particularly, the present invention relates to a high pressure form boron nitride-based sintered body having an excellent wear resistance and chipping resistance optimum for use in cutting tools such as milling insert and end mill.

Sintered bodies composed of a high pressure form boron nitride such as cubic boron nitride (cBN) and wurtzite boron nitride (wBN) and a continuous binding material exhibit a high hardness and a low reactivity with iron and hence a good wear resistance and thus have heretofore been used for cutting hardened steel. In order to further enhance the strength and toughness of this kind of sintered bodies, proposals have been made such as (1) method involving the enhancement of the strength of binding material and (2) method involving the enhancement of the bond strength between the binding material and the high pressure form boron nitride.

For example, Japanese Patent No. 140,223 (corresponding to JP-A-58-60679 (The term "JP-A" as used herein means an "unexamined published Japanese patent application")) discloses a boron nitride-based ultrahigh pressure sintered material having a composition including 5 to 40% by weight of one or more of nitride of Ti, Hf and Si, 5 to 35% by weight of one or more of oxide of Al, Zr and Y and the balance of cubic boron nitride and inevitable impurities, characterized in that the cubic boron nitride accounts for 40 to 90% of the composition by volume and the sintered material has a structure in which the cubic boron nitride is surrounded by the nitride to an average thickness of 0.1 to 2 µm (Conventional art 1).

JP-A-5-186844 discloses a sintered body composed of not less than 10% by volume of a composite hard layer having hard phase particles made of cubic boron nitride and/or wurtzite boron nitride the surface of which is surrounded by a single or lamellar layer made of at least one of nitride and boride of Ti, Zr, Mo, Al and Si and mutual solid-solution thereof. The layer has an average thickness of from 5 to 900 Å (Conventional art 2).

Although high pressure form boron nitride has a high hardness, it tends to cleave on specific planes. The high pressure form boron nitride is a material which is poor both in shear strength and toughness in a certain direction. Accordingly, it is not easy to enhance the strength and toughness of high pressure form boron nitride particles themselves without lowering the strength of the binding material or the bond strength between the binding material and the high pressure form boron nitride.

According to Conventional art 1, the coating of the surface of high pressure form boron nitride particles with a nitride makes it possible to prevent the production of voids due to failure in the contact of the particles to the binding material, thus enhancing toughness as well as wear resistance. However, since the binding material composed of oxides of Al or the like as main components, which have a low reactivity, the bond strength between the coated particles and the binding material is reduced. Accordingly, the toughness of the sintered body cannot be enhanced so much as a whole.

According to Conventional art 2, the reduction of the thickness of the coating layer on the surface of the high pressure form boron nitride particles from that disclosed in Japanese Patent No. 140,223 makes it possible to minimize defects in the coating layer. It is also described in Conventional art 2 that by sintering the coated particles by hot press process (HP) or hot hydrostatic process (HIP), the resulting sintered body can be provided with enhanced wear resistance, chipping resistance, toughness and impact resistance. However, since the thickness of the coating layer is too small, the resulting effect of enhancing the strength and toughness of the high pressure form boron nitride particles is insufficient.

It is an object of the present invention to provide a high pressure form boron nitride-based sintered body excellent both in strength and toughness.

A sintered body according to the present invention contains hard particles having high pressure type boron nitride particles covered by a coating layer and a binding material for integrating these hard particles. The coating layer contains as a starting material at least one of nitride and boride of Ti, Zr and Hf and solid-solution thereof and has an average thickness of 0.09 µm to 2 µm. The binding material contains as starting material 0.5% to 40% by weight of one or more of Al, elements belonging to iron group and nitride and boride thereof, less than 5% by weight of oxide of these elements, and the balance of one or more of nitride and boride of Ti, Zr, Hf and Ta and inevitable impurities. In the sintered body, the proportion of the hard particles in the total weight of unsintered starting materials is preferably from 10% to 99% by weight.

The inventors made studies of enhancement of strength and toughness of high pressure form boron nitride particles. As a result, a knowledge has been obtained that when high pressure form boron nitride particles are covered by a specific coating layer, a compression stress is applied to the high pressure form boron nitride particles, making it possible to enhance the strength and toughness thereof.

In other words, the sintered body according to the present invention is a high hardness and strength sintered body including hard particles having high pressure type boron nitride particles covered by a coating layer and a binding material for integrating these hard particles. The foregoing coating layer contains as a starting material at least one of nitride and boride of Ti, Zr and Hf and solid-solution thereof and has an average thickness of 0.09 µm to 2 µm. The binding material contains as starting material 0.5% to 40% by weight of one or more of Al, elements belonging to iron group and nitride and boride thereof, less than 5% by weight of oxide of these elements, and the balance of one or more of nitride and boride of Ti, Zr, Hf and Ta and inevitable impurities. The proportion of the hard particles in the total weight of unsintered starting materials is from not less than 10% by weight to not more than 99% by weight.

Examples of the high pressure form boron nitride employable herein include cBN and wBN. The content of high pressure form boron nitride is preferably from 40% to 80% by volume. The formation of the foregoing coating layer can be accomplished by chemical vapor phase deposition process (CVD), physical vapor phase deposition process (PVD), electrolyteess plating process or the like. The high pressure form boron nitride particles thus coated can be mixed with a binding material material by ordinary powder metallurgy, and then sintered by means of a plasma sintering machine, hot press, ultrahigh pressure sintering machine or the like to obtain the sintered body of the present invention.

The sintered body according to the present invention includes high pressure form boron nitride particles covered by a coating layer having a greater thermal expansion coefficient than high pressure form boron nitride. Accordingly, a compression stress is applied the high pressure form boron nitride particles when the temperature falls to room temperature after sintering, making it possible to enhance the strength and toughness of the high pressure form boron nitride particles. Further, a binding material having an optimum composition can be bonded also to the coated high pressure form boron nitride particles with an enhanced strength, making it possible to obtain a sintered body excellent in strength and toughness as a whole.

The reason why the main constitutions of the present invention are predetermined as mentioned above will be described hereinafter.

The high pressure form boron nitride is covered by Ti, Zr, Hf, nitride or boride thereof or solid-solution thereof before sintering. Since this coating layer then diffuses into and reacts with the binding material or high pressure form boron nitride during sintering, the high pressure form boron nitride thus sintered is surrounded by one or more of nitride and boride of Ti, Zr, Hf and Ta, and solid-solution and mutually dispersed structure thereof and thus is given a compression stress developed by heat stress given by the coating layer during temperature fall. If the average thickness of the structure surrounding the high pressure form boron nitride particles falls below 0.09 µm, the compression stress given to the high pressure form boron nitride particles by the coating layer during temperature fall is reduced, exerting an insufficient effect of enhancing the strength and toughness of the high pressure form boron nitride particles. On the contrary, if the average thickness of the structure surrounding the high pressure form boron nitride particles exceeds 2 µm, the bond strength between the hard particles and the binding material is reduced, causing a drop of strength of the sintered body as a whole.

Al elements belonging to iron group, and nitride and boride thereof exert an effect of enhancing the bond strength between the hard particles (high pressure form boron nitride particles having the foregoing coating layer) and the binding material. However, these elements can deteriorate the wear resistance of the sintered body if incorporated therein in a large amount. If the content of these elements falls below 0.5% by weight, a good effect of enhancing the bond strength cannot be expected. On the contrary, if the content of these elements exceeds 40% by weight, it deteriorates the wear resistance of the sintered body to disadvantage.

On the other hand, oxides of Al and elements belonging to iron group contained in the starting material or produced as impurities during preparation exert a reduced effect of enhancing the bond strength. Therefore, the content of these oxides is defined to be less than 5% by weight. In other words, the use of a binding material having a reduced amount of oxides makes it possible to enhance the bond strength between the hard particles and the binding material, improving the strength and toughness of the sintered body.

Further, if the content of high pressure form boron nitride in the sintered body is from 40 to 80% by weight, the resulting sintered body has a high hardness and strength to advantage. Referring to the reason why the proportion of hard particles in the total weight of unsintered starting materials is 10% to 99% by weight, if the proportion of hard particles falls below 10% by weight, the desired properties of the high hardness sintered body are impaired. On the contrary, if the proportion of hard particles exceeds 99% by weight, the amount of the binding material is reduced, producing an insufficient bond strength that deteriorates the properties of the sintered body. As high pressure form boron nitride, cubic boron nitride is preferable. Its average diameter is preferably in the range of 0.1 to 10µm.

### Examples

### (Example 1)

Using a known PVD apparatus (sputtering apparatus), coating layers having formulations set forth in Tables 1 and 2 were formed on the surface of commercially available cubic boron nitride particles having an average paricle diameter of 2µm, respectively. These hard particles were then subjected to identification of composition by a physical analysis method such as X-ray diffractometry and EPM (electron probe micro analyzer) or a chemical analysis method such as gas analysis to see if the desired composition was attained.

These hard particles were each mixed thoroughly with binding material powders set forth in Tables 1 and 2 to prepare final powders. These final powders were each then sintered at 5GPa and 1,300°C for 30 minutes using a belt type ultrahigh apparatus. Thereafter, the resulting sintered bodies were each identified by X-ray diffractometry (XRD), The results are set forth in Tables 1 and 2.

**Table 1**

| No. | *Cl | Starting material | | | | | Sintered body |
|---|---|---|---|---|---|---|---|
| | | Hard particles (coated cBN powder) | | | Binding material (Wt-% in final powder) | CBN content (vol-%) | Compound identified by XRD (except cBN) |
| | | Coating material | Layer thickness (nm) | wt-% of hard particles in final powder | | | |
| 1 | X | TiN | 90 | 48 | Al(0.3), TiN(46.7) ,TiB₁(5) | 50 | TiN, TiB₂ |
| 2 | ○ | TiN | 90 | 52 | Al(12), TiN(31), TiB₂(5) | 50 | TiN, TiB₂, AlB₂, AlN |
| 3 | ○ | TiN | 90 | 56 | Al(20), Al₂O₃(3), TiN(18), TiB₂(3) | 50 | TiN, TiB₂, AlB₂, AlN, Al₂O₃ |
| 4 | ○ | TiN | 90 | 60 | Al(28), TiN(12) | 50 | TiN, TiB₂, AlB₂, AlN |
| 5 | ○ | TiN | 90 | 63 | Al(33), TiN(4) | 50 | TiN, AlB₂, AlN |
| 6 | X | TiN | 90 | 54 | Al(20), Al₂O₃(8), TiN(18) | 50 | TiN, TiB₂, AlB₂, Al₂O₃ |
| 7 | ○ | ZrN | 150 | 59 | Al(15), AlN(5), TiN(16), HfN(5) | 55 | TiN, HfN, ZrN, AlB₂, AlN, ZrB₂ |
| 8 | ○ | ZrN | 150 | 59 | Al(15), AlB₂(5), TiN(16), HfN(5) | 55 | TiN, HfN, ZrN, AlB₂, AlN, ZrB₂ |
| 9 | ○ | HfN | 150 | 59 | AlN(15), AlN(5), TiN(16), HfN(5) | 55 | TiN, HfN, AlB₂, AlN, HfB₂ |

| | | | | | | | |
|---|---|---|---|---|---|---|---|
| *Cl. (Classification): O indicates example according to the present invention while X indicates comparative example. | | | | | | | |

**Table 2**

| No. | *Cl. | Starting material | | | | | Sintered body |
|---|---|---|---|---|---|---|---|
| | | Hard particles (coated cBN powder) | | | Binding material (wt-% in final powder) | CBN content (vol-%) | Compound identified by XRD (except cBN) |
| | | Coating material | Layer thicknees (nm) | wt-% of hard particles in final powder | | | |
| 10 | X | TiN | 50 | 50 | Al(15), TiN(30), TiB₂(5), | 55 | TiN, TiB₂, AlB₂, AlN |
| 11 | ○ | TiN | 2000 | 80 | Al(10), TiN(10) | 45 | TiN, TiB₂, AlB₂ |
| 12 | X | TiN | 2300 | 91 | Al(5), TiN(4) | 45 | TiN, TiB₂, AlB₂, |
| 13 | X | TiN | 2000 | 99.5 | Al(0.5) | 55 | TiN, TiB₂ |
| 14 | ○ | TiN | 200 | 75 | Al(4), Co(3), Ni(3), TiN(10), TaN(5) | 60 | TiN, TaN, AlB₂, Co₂B, Ni₂B, Ta₂B |
| 15 | ○ | TiN | 200 | 70 | Al(8), Co(4), TiN(10), TaN(5) | 55 | TiN, ZrN, AlB₂, Co₂B, Ti₂B |
| 16 | X | TiN | 90 | 95 | Al(3), TiN(2) | 85 | TiN, AlB₂, TiB₂ |
| 17 | X | TiN | 900 | 90 | Al(5), TiN(5) | 35 | TiN, AlB₂, TiB₂ |
| 18 | ○ | TiN | 1000 | 90 | Al(2), TiN(5), ZrN(3) | 50 | TiN, ZrN, TiB₂, AlB₂, |

| | | | | | | | |
|---|---|---|---|---|---|---|---|
| *Cl. (Classification): ○ indicates example according to the present invention while X indicates comparative example. | | | | | | | |

Further, these sintered bodies were each used to prepare cutting tips (ISO standard: SNGN120808). These cutting tips were then each subjected to cutting test under the following conditions. The results are set forth in Table 3.

Material to be cut: rod (φ 100 x L 300 mm) according to SCH420 with six 60° V-grooves provided at regular intervals on the periphery thereof
Cutting conditions (dry process):
Cutting rate (V): 120 m/min; feed rate (f):
0.1mm/rev; notch (d): 0.2 mm

**Table 3**

| No. | Classification | Flank wear width when the cutting length is 1 km (µm) | Cutting distance to loss (km) |
|---|---|---|---|
| 1 | X | - | 0.3 |
| 2 | ○ | 47 | 2.4 |
| 3 | ○ | 49 | 2.3 |
| 4 | ○ | 56 | 2.5 |
| 5 | ○ | 56 | 2.4 |
| 6 | X | 61 | 1.5 |
| 7 | ○ | 58 | 2.5 |
| 8 | ○ | 55 | 2.3 |
| 9 | ○ | 56 | 2.3 |
| 10 | X | 54 | 1.2 |
| 11 | ○ | 49 | 2.1 |
| 12 | X | - | 0.9 |
| 13 | X | - | 0.4 |
| 14 | ○ | 63 | 2.8 |
| 15 | ○ | 59 | 2.6 |
| 16 | X | 89 | 1.4 |
| 17 | X | - | 0.9 |
| 18 | ○ | 52 | 2.3 |
| Classification: O indicates example according to the present invention while X indicates comparative example. | | | |

As can be seen in these results, the sintered bodies of examples according to the present invention show enhancement of chipping resistance by not less than 50% without impairing the wear resistance thereof as compared with those of comparative examples. In other words, the sintered bodies of No.1, which has a reduced Al content in the binding material; No. 6, which has a large content of Al oxides in the binding material; No. 10, which has a reduced coating layer thickness; No. 12, which has a large coating layer thickness; No. 13, which has a large content of hard particles in the final powder; No. 16, which has a large cBN content; and No. 17, which has a reduced cBN content, are all inferior to those of the examples of the present invention with respect to the results of cutting test.

As mentioned above, the present invention can provide a sintered body excellent both in strength and toughness. The sintered body according to the present invention can be expected to be used as a long-lived tool in the art of cutting tools such as milling insert and end mill.

## Claims

1. A high hardness and strength sintered body comprising: hard particles including high pressure type boron nitride particles and a coating layer coating each of the high pressure type boron nitride particles; and a binding material for integrating the hard particles;
wherein the coating layer is made of at least one of nitride and bcride of Ti, Zr and Hf and solid-solution thereof as starting material and has an average thickness in the range of 0.09 µm to 2 µm;
the binding material comprises 0.5% to 40% by weight of one or more of Al, elements belonging to iron group and nitride and boride thereof, less than 5% by weight of oxide of Al and elements belonging to iron group, and the balance of one or more of nitride and boride of Ti, zr, Hf and Ta and inevitable impurities as starting materials; and
the proportion of the hard particles in the total weight of unsintered starting materials is in the range of 10% to 99% by weight.

2. The high hardness and strength sintered body according to claim 1, wherein the high pressure type boron nitride is incorporated therein in the range of 40% to 80% by volume.
